# EUROPÄISCHE PATENTSCHRIFT

(11) **EP 2 650 092 B1**
(45) Veröffentlichungstag und Bekanntmachung des Hinweises auf die Patenterteilung: **26.02.2014**
(21) Anmeldenummer: 12199691.2
(22) Anmeldetag: 28.12.2012
(51) Int. Cl.: B26D 3/00, B29D 30/46

(54) **Vorrichtung und Verfahren zur Kantentrimmung der Kanten eines Stahl- oder Textilcordbands**
Device and process for trimming the edges of a steel or textile cord strip
Dispositif et procédé de rognement des bords d'une bande de textile ou d'acier

(30) Priorität: 12.04.2012 DE 102012007198
(43) Veröffentlichungstag der Anmeldung: 16.10.2013
(73) Patentinhaber: Karl Eugen Fischer GmbH, 96224 Burgkunstadt (DE)
(72) Erfinder: Hoffmann, Bernd, 96224 Burgkunstadt (DE); Klenner, Ralf, 96272 Hochstadt (DE)
(74) Vertreter: Blaumeier, Jörg

(56) Entgegenhaltungen:
- EP-A1- 0 678 375
- CA-A1- 1 236 000
- DE-U1-202010 005 010
- SU-A1- 439 117
- US-A- 2 609 049
- US-A- 4 784 030

## Beschreibung

Die Erfindung betrifft eine Vorrichtung zur Kantentrimmung der Kanten eines Stahl- oder Textilcordbands. Ferner befrifft die Erfindung ein Verfahren zum Trimmen einer Kante eines Stahl- oder Textilcordbands.

Stahl- oder Textilcordbänder werden vornehmlich in der Reifenindustrie zur Bildung der Karkassen oder Gürtel der zu produzierenden Reifen verwendet. Diese Bänder bestehen aus einer elastischen, häufig noch leicht klebrigen Matrix aus einem Gummi oder einem Elastomer, in die parallel zueinander verlaufende Stahloder Textilfäden eingelegt sind. Die Bänder werden durch Kalandrieren hergestellt. Die vom Kalander produzierten Kanten der Bänder sind jedoch nicht immer so genau, dass das Material, das nachfolgend quer zur Längsrichtung geschnitten wird, kantenseitig miteinander verspleißt werden könnte, ohne die Kanten vorher zu beschneiden, also zu "trimmen". Es kommt mitunter vor, dass die Fäden an den Außenseiten des Cordbandmaterials frei liegen, was dazu führt, dass der anschließende Spleiß die erforderliche Festigkeit nicht erreicht, da für hohe Spleißfestigkeiten beide zu verschleißenden Bandkanten bzw. die entsprechenden äußeren Fäden an den zu verspleißenden Bandkanten mit genügend elastischem Matrixmaterial, also Gummi oder dergleichen belegt sein müssen. Ferner kommt es mitunter vor, dass nach dem Kalandrieren zuviel Matrixmaterial auf den Fäden an den Bandaußenseiten, also den Kanten, ist. Dies hat zur Folge, dass nach dem anschließenden Verspleißen der Fadenabstand der beiden im verspleißten Bauteil benachbarten Fäden am Spleiß zu groß ist. Das hieraus gefertigte Produkt, also die Karkasse oder der Gürtel, hat somit unterschiedliche Drahtabstände, was die Festigkeit bzw. die mechanischen Eigenschaften des hinterher produzierten Reifens mindern kann.

Zur Erzeugung geometrisch einwandfreier Bandkanten findet die sogenannte Kantentrimmung unter Verwendung einer entsprechenden Vorrichtung statt. Diese Kantentrimmungsvorrichtungen können sowohl im Kalander selbst als auch in einer im nachgelagerten Produktionsprozess integrierten Cordbandschneidmaschine verwendet werden. Im Rahmen der Kantentrimmung werden bei Auftreten "schlechter" Kanten die Randbereiche abgeschnitten, wobei im abgeschnittenen Randbereich mindestens ein Faden oder Draht enthalten ist. Das heißt, dass zwischen zwei in der Matrix eingebrachten Fäden entlang geschnitten wird. Durch den Schnitt werden geometrisch einwandfreie Kanten erzeugt, nach dem Schnitt sind die äußeren Fäden in der gewünschten Stärke mit Matrixmaterial belegt, so dass die Kanten einwandfrei verspleißt werden können.

Bekannte Kantentrimmvorrichtungen weisen ein Messer auf, das den Schnitt zwischen zwei Fäden vornimmt, um den Randabschnitt anzutrennen. Als Messer kommen entweder einfache Messer mit in der Regel gerader Klinge zum Einsatz, die quasi vertikal stehend das Band schneiden. Alternativ hierzu kann auch ein Rollenmesserpaar verwendet werden, mit einem oberen und unteren Rollenmesser, die miteinander in Schneidkontakt stehen und zusammenwirkend das Band schneiden. Beispiele für derartige Vorrichtungen sind in den Dokumenten CA 1 236 000 A1, US 4,784,030 und DE 20 2010 005 010 U1 offenbart.

Zunehmend kommen jedoch Anwendungen auf, bei denen relativ dicke Stahl- oder Textilcordbänder verwendet werden, die eine Gesamtmaterialdicke von mehr als 3 mm aufweisen, mitunter Dicken von 13 mm oder mehr. Sie sind also um ein Vielfaches dicker als übliche Stahl- oder Textilcordbänder, die eine Dicke von ca. 2 - 3 mm aufweisen. Die Kantentrimmung solcher dicken Bänder erweist sich jedoch als problematisch, da bei Verwendung üblicher Messer mit stehender Klinge in Folge der Dicke des Matrixmaterials sehr hohe Schnittkräfte gegeben sind, die eine produktionssichere Anwendung erschweren, weshalb häufig ein Nacharbeiten erforderlich ist. Bei Durchführung der Trimmung mit von den Schnittkräften her leichter beherrschbaren Rollenmessern hat sich herausgestellt, dass diese Kanten nicht immer die erforderliche Festigkeit im Spleiß bieten.

Der Erfindung liegt damit das Problem zugrunde, eine Vorrichtung zur Kantentrimmung anzugeben, die insbesondere die Trimmung dicker Stahl- oder Textilcordbänder, die eine Dicke von 3 mm und mehr aufweisen, ermöglicht.

Zur Lösung dieses Problems zeichnet sich eine Vorrichtung der eingangs genannten Art erfindungsgemäß durch zwei übereinander angeordnete, nicht miteinander in Schneidkontakt stehende Rollenmesser, die die Matrix an der Oberseite und der Unterseite einschneiden, sowie ein diesen nachgeschaltetes Messer, das den Schnitt vollendet, aus.

Es hat sich überraschend herausgestellt, dass sich durch die Kombination von Rollenmessern und einem Messer mit stehender Klinge sowie Durchführung von nur Teilschnitten mit den jeweiligen Messern einerseits eine sehr gute Kantentrimmung erreichen lässt, andererseits hierüber auch Kanten geschaffen werden können, die zur sehr guten Spleißergebnissen führen. Erfindungsgemäß weist die Vorrichtung ein Rollenmesserpaar auf, mit zwei übereinander angeordneten Rollenmessern. Diese stehen nicht miteinander in Schneidkontakt, das heißt, sie schneiden das Material nicht komplett durch, sondern lediglich ein. Wird also das Band durch das Rollenmesserpaar gezogen, so wird es lediglich ober- und unterseitig eingeschnitten, wobei die Einschnitttiefe abhängig vom Grad der Zustellung der beiden Rollenmesser ist. Ist das Band beispielsweise 8 mm stark, so kann über jedes Rollenmesser ein Einschnitt um 2 oder 3 mm erfolgen.

Den Rollenmessern nachgeschaltet ist nun ein Messer mit stehender Klinge, das den Schnitt vollendet. Dieses nachlaufende Messer trennt also endgültig das Material. Hierbei muss es lediglich noch die Restdicke durchtrennen, die, bezogen auf das obige Beispiel, nur noch beispielsweise 4 oder 2 mm beträgt, mithin also in einem deutlich geringeren Bereich bezogen auf die Gesamtdicke liegt. Da nur noch wesentlich weniger Material zu schneiden ist, sind folglich die gegebenen Schnittkräfte wesentlich geringer, so dass auch dieser Schnitt produktionssicher durchgeführt werden kann.

Erfindungsgemäß sind also die Rollenmesser im Gegensatz zu bekannten Lösungen nicht miteinander in Schneidkontakt und somit auch nicht in der Lage, alleine den Schnitt auszuführen. Ihre Aufgabe ist es, das Cordbandmaterial an der Oberseite und der Unterseite leicht einzuschneiden und gleichzeitig das nachfolgende Messer mit stehender Klinge an der richtigen Stelle im Cordbandmaterial zu zentrieren. Der endgültige Schnitt erfolgt dann durch das nachlaufende Messer, das infolge des vorlaufenden Einschnitts wesentlich weniger Material zu schneiden hat.

Die mit der erfindungsgemäßen Vorrichtung getrimmten Kanten weisen zum einen geometrische Verhältnisse auf, die einen sehr guten Spleiß ermöglichen. Denn die kantenseitigen Fäden sind mit einer hinreichenden Matrixschicht belegt. Versuche haben gezeigt, dass sich derartige Kanten hervorragend verspleißen lassen und die geforderte, hohe Spleißfestigkeit im Spleiß gegeben ist. Auch lässt sich der Schneidvorgang selbst produktionssicher gestalten und beherrschen, nachdem er quasi in zwei Stufen durchgeführt wird, indem zunächst ober- und unterseitig eingeschnitten wird, wobei hierüber die wesentliche Materialdicke geschnitten wird, wonach im zweiten Schneidvorgang der endgültige Schnitt mit dem Messer mit stehender Klinge, dann jedoch mit beherrschbaren Schnittkräften, durchgeführt wird.

Besonders zweckmäßig ist es, wenn das nachgeschaltete Messer ein beheizbares Messer ist. Das heißt, dass der zweite Schnitt ein "Heißschnitt" ist, was sich besonders vorteilhaft hinsichtlich einer Verbesserung der Spleißfestigkeit auswirkt. Dieser Heißschnitt ist auch bei diesen dicken Bändern ohne weiteres möglich, da infolge des vorherigen Einschnitts über die Rollenmesser das Heißmesser nur noch eine geringere Materialstärke schneiden muss.

Das nachgeschaltete Messer kann dabei ein Hakenmesser sein, das eine V-förmige Klinge aufweist, es kann sich um ein Messer mit einer geraden oder gerundeten Schneide handeln, oder auch um ein Drahtmesser, das als feststehendes Schneidelement einen Schneiddraht aufweist. Alle diese Messer können auch beheizt sein.

Bevorzugt sind die Rollenmesser und das nachgeschaltete Messer an einer gemeinsamen Halterung angeordnet, die entweder starr an einem Rahmen angeordnet sein kann, oder längs wenigstens einer Achse verschiebbar an einem Rahmen angeordnet ist. Während bei starrer Halterungsanordnung die Schnittlinie festgelegt ist, ermöglicht eine leicht verschiebliche Halterungsanordnung, dass die Messer den eingebetteten Fäden bei etwaigen Breitenschwankungen des Bandmaterials leichter folgen können, mithin also leichte Fadenversätze im Millimeterbereich ausgleichen können. Hierzu ist die Halterung um eine entsprechende horizontale Achse, die senkrecht zur Band- respektive Fadenlängsrichtung steht, beweglich angeordnet und auf dieser Achse selbstverständlich sehr leicht verschiebbar.

In Weiterbildung der Erfindung kann vorgesehen sein, dass das nachgeschaltete Messer um eine Vertikalachse verdrehbar und arretierbar ist. Diese Erfindungsausgestaltung ermöglicht es, das Messer im Schnittwinkel etwas zu verstellen, was je nach Material mitunter zur Verbesserung des Spleißes dienlich sein kann.

Eine weitere Verstellmöglichkeit kann dadurch vorgesehen sein, dass das nachgeschaltete Messer längs einer Horizontalachse, die senkrecht zur Bewegungsrichtung des Bandes steht, bewegbar und arretierbar ist. Das heißt, dass das nachgeschaltete Messer - wie auch die Halterung als solche - um eine Horizontalachse senkrecht zur Band- respektive Fadenlängsrichtung bewegbar und feststellbar ist. Dies ermöglicht es, das nachgeschaltete Band nicht fluchtend zur Schneidlinie der beiden Rollenmesser einzustellen, was mitunter erforderlich sein kann, wenn gewünscht wird, dass an der Bandkante etwas mehr oder weniger Gummi verbleibt. Die Grundeinstellung ist jedoch, dass das nachgeschaltete Messer mit den Rollenmessern fluchtet, dass also mithin in derselben Ebene geschnitten wird.

Daneben betrifft die Erfindung ein Verfahren zum Trimmen einer Kante eines eine Dicke von wenigstens 3 mm, insbesondere von mehr als 4 mm aufweisenden Stahl- oder Textilcordbandes, insbesondere unter Verwendung einer Vorrichtung der zuvor beschriebenen Art, bei welchem Verfahren mittels zwei übereinander angeordneter, jedoch nicht in Schneidkontakt miteinander stehender Rollenmesser ober- und unterseitig die Matrix des Cordbands eingeschnitten wird, wonach mittels eines nachlaufenden Messers die noch verbleibende Bandmatrix durchgeschnitten wird.

Beim erfindungsgemäßen Verfahren wird also mittels des Rollenmesserpaares das elastische Bandmaterial, in das die Stahl- oder Textilfäden, die parallel zueinander verlaufen, eingebettet sind, ober- und unterseitig nur eingeschnitten, wobei die Endschnitttiefe entsprechend angepasst werden kann, nachdem die Rollenmesser in ihrem Abstand zueinander verstellt werden können. Hierzu sind sie entsprechend verstellbar an einer Halterung angeordnet. Verfahrensgemäß wird anschließend über ein vorzugsweise an derselben Halterung befindliches nachlaufendes Messer beispielsweise in Form eine Hakenmessers oder dergleichen die noch verbleibende Bandmatrix, also das noch nicht komplett durchgeschnittene Bandmaterial endgültig durchgeschnitten. Das heißt, dass das nachlaufende Messer letztlich die beiden Einschnitte über die Rollenmesser fortsetzt und den gesamten Schnitt vollendet. Dabei kann entweder ein kaltes nachlaufendes Messer verwendet werden, oder bevorzugt ein heißes Messer, das über eine geeignete Heizeinrichtung auf eine gewünschte Temperatur erwärmt werden kann. Das heißt, dass der endgültige Schnitt ein Heißschnitt ist. Die Temperierung des Messers wirkt sich vorteilhaft nicht nur auf den eigentlichen von ihm durchgeschnittenen Materialbereich aus, sondern auch auf diesen Materialbereich, da die Bandmatrix, die zuvor über die Rollenmesser eingeschnitten wird, letztlich auch unmittelbar benachbart oder am beheizten nachlaufenden Messer entlang gleitet, so dass die hinsichtlich der Verspleißfestigkeit vorteilhafte Erwärmung, also der Temperatureintrag, auch dort gegeben ist und mithin die gesamte geschnittene Bandkante quasi über das Heißmesser "bearbeitet" ist.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Seitenansicht einer erfindungsgemäßen Vorrichtung zur Kantentrimmung,
- Fig. 2: eine Perspektivansicht der Vorrichtung aus Fig. 1,
- Fig. 3: eine entsprechende Ansicht der Vorrichtung aus Fig. 2 von der anderen Seite,
- Fig. 4: eine Prinzipdarstellung zur Erläuterung der einzelnen Schnittphasen, und
- Fig. 5: eine Prinzipdarstellung der Schnittphasen gemäß Fig. 4 in einer Aufsicht auf das Material.

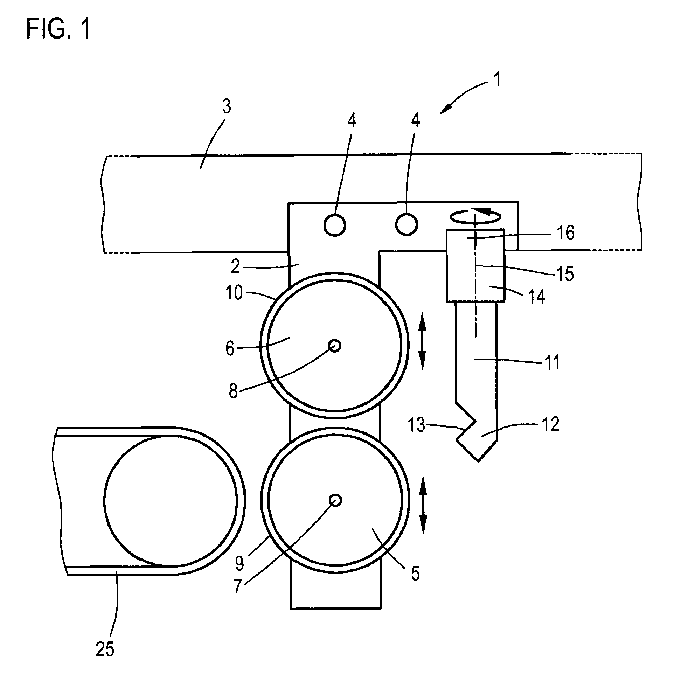

Fig. 1 zeigt eine erfindungsgemäße Vorrichtung 1 zum Trimmen einer Kante eines relativ dicken, insbesondere eine Dicke von wenigstens 3, vorzugsweise von wenigstens 4 mm bis hin zu 13 mm und mehr aufweisenden Stahl- oder Textilcordbandes. Die Vorrichtung umfasst eine Halterung 2, die an einem Rahmen 3 einer Maschine, beispielsweise einem Kalander oder einer Cordbandschneidmaschine, angeordnet ist. Sie ist vorzugsweise längs der beiden in Fig. 1 gezeigten Horizontalachsen 4 horizontal verschiebbar, so dass sie sich, worauf nachfolgend noch eingegangen wird, automatisch am Verlauf parallel laufender Stahl- oder Textilfäden, die im zu schneidenden Bandmaterial eingebracht sind, ausrichten kann, mithin also selbsttätig seitengeführt ist.

An der Halterung 4 sind zwei lose laufende oder über einen Antrieb angetriebene Rollenmesser 5, 6 um jeweils eine Drehachse 7, 8 drehbar angeordnet. Wie die beiden Doppelpfeile zeigen, können sie auch relativ zueinander verstellt werden, um ihren Abstand einzustellen. Jedes Rollenmesser 5, 6 weist eine Schneide 9, 10 auf. Wie Fig. 1 zeigt, und wie auch wesentlich für die erfindungsgemäße Vorrichtung wie auch das erfindungsgemäße Verfahren ist, stehen die Rollenmesser 5, 6, respektive ihre Schneiden 9, 10 nicht in Schneidkontakt miteinander, das heißt, sie schneiden das zu bearbeitende Band nicht vollständig durch. Vielmehr dienen sie lediglich dazu, das Material ober- und unterseitig einzuschneiden.

Der endgültige Schnitt erfolgt mittels eines nachgeschalteten Messers 11, das hier als Hakenmesser 12 ausgeführt ist und eine hakenförmige Schneide 13 aufweist. Das Messer 11 ist beheizbar, es ist mit einer Heizeinrichtung 14 gekoppelt. Über die Heizeinrichtung 14 ist es im gezeigten Beispiel an der Halterung 2 angeordnet. Es kann, wie der runde Pfeil zeigt, einerseits um eine Vertikalachse 15 verdreht werden, so dass sich folglich die Winkelstellung der hakenförmigen Schneide 13 und damit des Messers 11 relativ zum schneidenden Band respektive relativ zu den umlaufenden Schneiden 9, 10 der Rollenmesser 5, 6 verstellen lässt, was mitunter je nach zu behandelndem Material erforderlich ist. In der gewünschten Verdrehstellung ist das Messer 11 selbstverständlich arretierbar.

Ferner ist, wie das Kreuzsymbol darstellt, die Heizeinrichtung 14 und mit ihr das Messer 11 auch längs einer horizontal verlaufenden Achse (die parallel zu den Achsen 4 läuft) horizontal verschiebbar. Das heißt, dass das Messer 11 in seiner Ausrichtung relativ zu den Schneiden 9, 10 der Rollenmesser 5, 6 seitlich verstellt werden kann. Das bietet die Möglichkeit, das Messer 11 entweder fluchtend mit den Schneiden 9, 10 einzustellen, das heißt, dass seine hakenförmige Schneide 13 in derselben Ebene schneidet wie die Schneiden 9, 10. Falls es vom zu schneidenden Material her erforderlich ist, einen Versatz zu erzeugen, kann das Messer nicht fluchtend eingestellt werden, es ist lediglich erforderlich, es entlang der Achse 16 horizontal zu verschieben und anschließend zu arretieren.

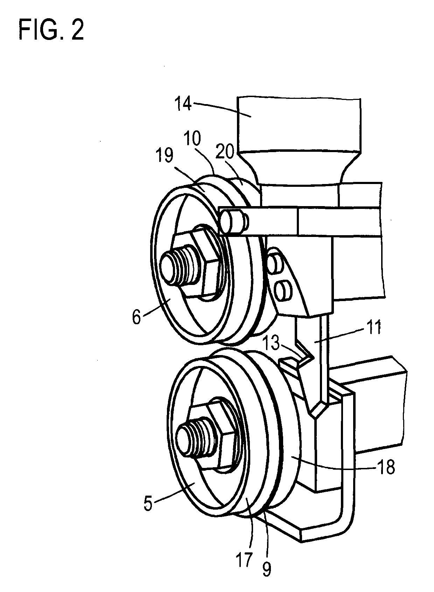

Fig. 2 zeigt in Form einer Perspektivansicht in detaillierter Form die beiden Rollenmesser 5, 6 sowie das nachlaufende Messer 11.

Die beiden Rollenmesser weisen jeweils zylindrische Abschnitte 17, 18 bzw. 19, 20 auf, zwischen denen die jeweilige Schneide 9, 10 umläuft. Die beiden zylindrischen Abschnitte 17, 18 respektive 19, 20 dienen der Führung des zwischen den Rollenmessern 5, 6 befindlichen, einzuschneidenden Cordbandmaterials.

Das Messer 11 ist wie ausgeführt als Hakenmesser ausgeführt, deutlich erkennbar ist die hakenförmige Schneide 13, die bevorzugt fluchtend mit der über die beiden Schneiden 9, 10 gebildeten Schneidebene verläuft, jedoch ist auch wie ausgeführt ein Seitenversatz oder eine Verdrehstellung diesbezüglich denkbar.

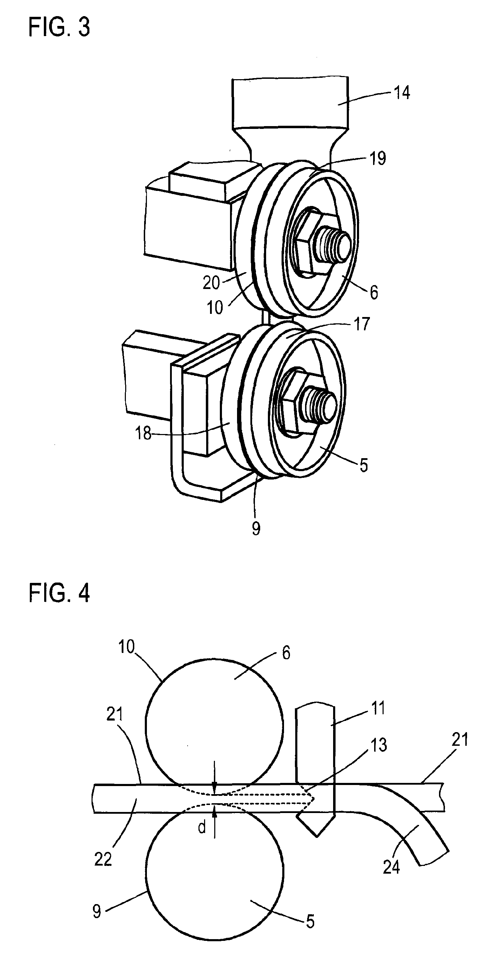

Fig. 3 zeigt die Anordnung aus Fig. 2 von der anderen Seite, wobei nochmals deutlich die Konfiguration der Rollenmesser wie auch der Abstand der umlaufenden Schneiden 9, 10 zueinander dargestellt ist.

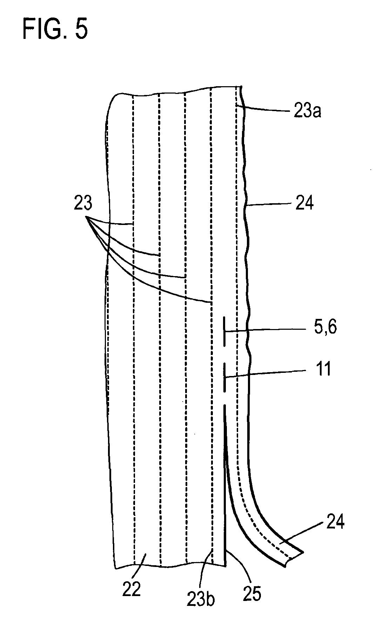

Die Fig. 4 und 5 zeigen das Arbeitsprinzip der erfindungsgemäßen Vorrichtung respektive das erfindungsgemäße Verfahren. Dargestellt ist zu schneidendes Stahl- oder Textilcordband 21, bestehend aus einem elastischen Material, beispielsweise Gummi, das die Bandmatrix 22 bildet, in welcher vollständig eingebettet eine Vielzahl parallel laufender Stahl- oder Textilfäden 23 in Bandlängsrichtung verlaufen, siehe Fig. 5. Das Stahl- oder Textilcordband wird in einem Kalander hergestellt. Hierbei kann es auftreten, dass an der Bandkante 24 kein homogener Materialverlauf des die Matrix 22 bildenden elastischen Materials gegeben ist, wie übertrieben in Fig. 5 gezeigt ist. Ersichtlich liegt der unmittelbar kantenseitig befindliche Stahl- oder Textilfaden 23a nicht homogen seitlich eingebettet in der Matrix 22, er kann sogar teilweise freiliegen. Deshalb ist es erforderlich, unter Verwendung der erfindungsgemäßen Vorrichtung 1 die Kante zu bearbeiten, also zu "trimmen". Über eine hier vorgeschaltete Fördereinrichtung, beispielsweise ein Förderband 25 (siehe Fig. 1), wird das Stahl- oder Textilcordband 21 in den Bereich der Vorrichtung 1 gefördert, es läuft, da es sich um ein extrem langes Band handelt, zwischen die beiden Rollenmesser 5, 6, die - siehe Fig. 4 - mit ihren umlaufenden Schneiden 9, 10 ober- und unterseitig in das Material, also die Matrix 22 einschneiden. Ersichtlich stehen die Schneiden 9, 10 jedoch nicht in Schneidkontakt miteinander, das heißt, dass eine Materialdicke d verbleibt, die nicht geschnitten ist, wie in Fig. 4 gezeigt und über die sich zum nachlaufenden Messer 11 erstreckenden gestrichelten Linien dargestellt ist. Oberhalb und unterhalb davon ist über die Schneiden 9, 10 das Material eingeschnitten. Alternativ oder zusätzlich zu einer vorgeschalteten Fördereinrichtung kann auch eine nachgeschaltete Fördereinrichtung zum Durchziehen des Bandes durch die Messerkombination vorgesehen sein.

Das Band 21 läuft nun weiter und gegen die Schneide 13 des Messers 11, das wie beschrieben vorzugsweise beheizt ist. Dort wird nun auch die verbleibende Materialdicke d gänzlich durchgeschnitten. Der abgeschnittene Bandabschnitt 24 wird abgezogen, siehe die Fig. 4 und 5.

Wie insbesondere Fig. 5 zeigt, in der eine Aufsicht auf das Cord- oder Textilband 21 gezeigt ist, und in der die Position der Rollenmesser 5, 6 wie auch des nachlaufenden Messers 11 über die jeweiligen Linien angedeutet ist, ist die Kante 25 des geschnittenen Cordbands 21 gerade, der nunmehr kantennahe liegende Stahl- oder Textilfaden 23b ist symmetrisch respektive homogen vom Matrixmaterial 22 umgeben. Es ist also eine für einen sehr festen Spleiß optimale Kante gegeben.

Ersichtlich verläuft die Schnittebene der Rollenmesser 5, 6 und des Messers 11 im gezeigten Beispiel fluchtend hintereinander, was jedoch nicht zwingend der Fall sein muss. Auch ist ein leichter Versatz des Messers 11 relativ zu den Messern, 5, 6 denkbar. In jedem Fall laufen sie aber zwischen zwei benachbarten Fäden 23a, 23b. Da auch diese Fäden mitunter nicht unbedingt gerade verlaufen, sondern leicht gewellt, kann sich folglich die Materialbreite etwas ändern. Um dennoch exakt zwischen den beiden Fäden schneiden zu können, ist wie beschrieben die Halterung 2 nebst sämtlicher Messer längs der Achsen 4 horizontal bewegbar, so dass sie sich selbsttätig zwischen den Fäden 23a, 23b zentrieren kann.

Wenngleich das Messer 11 als Hakenmesser 12 gezeigt, kann es grundsätzlich auch als einfaches Messer mit einer geraden oder leicht gerundeten Klinge ausgeführt sein, es kann aber auch als Drahtmesser realisiert sein. Bevorzugt ist es in jedem Fall als beheizbares Messer ausgeführt.

Der Schnitt der beiden Rollenmesser 5, 6 kann, wie ausgeführt, durch entsprechende Verstellung eingestellt werden. Sie hängt natürlich davon ab, wie dick das zu schneidende Band 21 insgesamt ist. Denkbar ist beispielsweise, dass die Rollenmesser 5, 6 jeweils ein Drittel der Gesamtdicke tief einschneiden, das verbleibende Drittel, also die Materialdicke d, wird sodann über das nachlaufende Messer 11 geschnitten. Dies ist jedoch lediglich beispielhaft, selbstverständlich kann die konkrete Einschneidtiefe und damit auch die verbleibende Materialdicke d beliebig und gegebenenfalls auch abhängig vom zu schneidenden Materialtyp eingestellt werden.

## Patentansprüche

1. Vorrichtung zur Kantentrimmung der Kanten eines Stahl- oder Textilcordbands bestehend aus einer elastischen Matrix mit eingelegten, parallel zueinander verlaufenden Stahl- oder Textilfäden, **gekennzeichnet durch** zwei übereinander angeordnete, nicht miteinander in Schneidkontakt stehende Rollenmesser (5, 6), die die Matrix (22) an der Oberseite und der Unterseite einschneiden, sowie ein diesen nachgeschaltetes Messer (11), das den Schnitt vollendet.

2. Vorrichtung nach Anspruch 1, **dadurch gekennzeichnet, dass** das nachgeschaltete Messer (11) ein beheizbares Messer ist.

3. Vorrichtung nach Anspruch 1 oder 2, **dadurch gekennzeichnet, dass** das nachgeschaltete Messer (11) ein Hakenmesser (12), ein eine gerade oder gerundete Schneide aufweisendes Messer oder ein Drahtmesser ist.

4. Vorrichtung nach einem der vorangehenden Ansprüche, **dadurch gekennzeichnet, dass** eine gemeinsame Halterung (2) für die Rollenmesser (5, 6) und das nachgeschaltete (11) Messer vorgesehen ist.

5. Vorrichtung nach Anspruch 4, **dadurch gekennzeichnet, dass** die Halterung (2) starr an einem Rahmen (3) angeordnet ist, oder das die Halterung (2) längs wenigstens einer Achse (4) verschiebbar an einem Rahmen (3) angeordnet ist.

6. Vorrichtung nach einem der vorangehenden Ansprüche, **dadurch gekennzeichnet, dass** das nachgeschaltete Messer (11) um eine Vertikalachse (15) verdrehbar und arretierbar ist.

7. Vorrichtung nach einem der vorangehenden Ansprüche, **dadurch gekennzeichnet, dass** das nachgeschaltete Messer (11) längs einer Horizontalachse (16), die senkrecht zur Bewegungsrichtung des Bandes (21) steht, bewegbar und arretierbar ist.

8. Verfahren zum Trimmen einer Kante eines eine Dicke von wenigstens 3 mm, insbesondere von mehr als 4 mm aufweisenden Stahl- oder Textilcordbands, insbesondere unter Verwendung einer Vorrichtung (1) nach einem der vorangehenden Ansprüche, bei welchem Verfahren mittels zweier übereinander angeordneter, jedoch nicht in Schneidkontakt miteinander stehender Rollenmesser (5, 6) ober- und unterseitig die Matrix (22) des Cordbands (21) eingeschnitten wird, wonach mittels eines nachlaufenden Messers (11) die noch verbleibende Bandmatrix (22) durchgeschnitten wird.

9. Verfahren nach Anspruch 8, **dadurch gekennzeichnet, dass** das nachlaufende Messer (11) beheizt ist.

## Claims

1. A devise for edge-trimming the edges of a steel or textile-cord strip comprising an elastic matrix with embedded steel or textile threads expending parallel to one another,
**characterised by**
two roller knives (5, 6) not disposed in cutting contact with one another, arranged one above the pother, which cut into the matrix (22) at the upper side and the lower side, and a knife (11) arranged downstream of the latter which completes the cut.

2. The devise according to claim 1,
**characterised in that**
the knife (11) arranged downstream is a heatable knife.

3. The device according to claim 1 or 2,
**characterised in that**
the knife (11) arranged downstream is a hook knife (12), a knife providing a straight or curved blade or a wire knife.

4. The device according to any one of the preceding claims,
**characterised in that**
a common holder (2) is provided for the roller knife (5, 6) and the knife (11) arranged downstream.

5. The device according to claim 4,
**characterised in that**
the holder (2) is arranged rigidly on a frame (3), or that the holder (2) is arranged in a displaceable manner along at least one axis (4) on a frame (3).

6. The device according to any one of the preceding claims,
**characterised in that**
the knife (11) arranged downstream can be rotated about a vertical axis (15) and locked.

7. The device according to any one of the preceding claims,
**characterised in that**
the knife (11) arranged downstream can be displaced along a horizontal axis (16) which stands perpendicular to the direction of movement of the strip (21) and locked.

8. A method for trimming an edge of a steel or textile-cord strip providing a thickness of at least 3 mm, especially of more than 4 mm, especially with the use of a device (1) according to any one of the preceding claims, in which method, by means of two roller knives (5, 6) arranged one above the other but not disposed in cutting contact with one another, the matrix (22) of the cord strip (21) is cut into on the upper side and lower side, after which the still remaining strip matrix (22) is cut through by means of a knife (11) operating downstream.

9. The method according to claim 8,
**characterised in that**
the knife (11) operating downstream is heated.

## Revendications

1. Dispositif de rognement des bords d'une bande de textile ou d'acier constituée d'une matrice élastique comprenant des fils de textile ou d'acier intégrés s'étendant parallèlement les uns aux autres, **caractérisé par** deux lames tournantes (5, 6) agencées l'une au-dessus de l'autre sans être en contact de coupe l'une avec l'autre, qui coupent la matrice (22) sur le côté supérieur et le côté inférieur, ainsi que par une lame (11) montée en aval de celles-ci, qui termine la coupe.

2. Dispositif selon la revendication 1, **caractérisé en ce que** la lame (11) montée en aval est une lame chauffante.

3. Dispositif selon la revendication 1 ou 2, **caractérisé en ce que** la lame (11) montée en aval est une lame crochue (12), une lame présentant un tranchant droit ou arrondi ou une lame à fil.

4. Dispositif selon l'une des revendications précédentes, **caractérisé en ce qu'**un support (2) commun est prévu pour les lames tournantes (5, 6) et pour la lame (11) montée en aval.

5. Dispositif selon la revendication 4, **caractérisé en ce que** le support (2) est agencé sur un châssis (3) de façon fixe ou **en ce que** le support (2) est agencé sur un châssis (3) de façon à pouvoir coulisser le long d'au moins un axe (4).

6. Dispositif selon l'une des revendications précédentes, **caractérisé en ce que** la lame (11) montée en aval peut être mise en rotation et peut être bloquée autour d'un axe vertical (15).

7. Dispositif selon l'une des revendications précédentes, **caractérisé en ce que** la lame (11) montée en aval peut être déplacée et peut être bloquée le long d'un axe horizontal (16) qui est perpendiculaire à la direction de déglacement de la bande (21).

8. Procédé de rognement d'un bord d'une bande de textile ou d'acier présentant une épaisseur d'au moins 3 mm, en particulier de plus de 4 mm, en particulier en utilisant un dispositif (1) selon l'une des revendications précédentes, dans lequel procédé la matrice (22) de la bande (21) est coupée sur le côté supérieur et inférieur au moyen de deux lames tournantes (5, 6) agencées l'une au-dessus de l'autre sans toutefois être en contact de coupe l'une avec l'autre, après quoi la matrice de la bande (22) subsistante est coupée au moyen d'une lame consécutive (11).

9. Procédé selon la revendication 8, **caractérisé en ce que** la lame consécutive (11) est chauffée.
